# EUROPEAN PATENT SPECIFICATION

(11) **EP 1 895 040 B1**
(45) Date of publication and mention of the grant of the patent: **05.11.2008**
(21) Application number: 06425598.7
(22) Date of filing: 29.08.2006
(51) Int. Cl.: D06F 39/12, A47L 15/42

(54) **System for adjusting the height of a built-in household appliance, in particular a washing machine**
Vorrichtung zum Einstellen der Höhe eines Einbauhaushaltgerätes, insbesonders einer Waschmaschine
Dispositif pour ajuster la hauteur d'un appareil ménager encastré, en particulier d'une machine à laver

(43) Date of publication of application: 05.03.2008
(73) Proprietor: Bonferraro S.p.A., 37060 Bonferraro (VR) (IT)
(72) Inventor: Gastaldelli, Lucio, 46037 Roncoferraro MN (IT); Pelino, Fabrizio, 37060 Bonferraro VR (IT); Tosi, Mauro, 37051 Bovolone VR (IT)
(74) Representative: Concone, Emanuele

(56) References cited:
- DE-U1- 9 112 657
- DE-U1-9202004 017 32

## Description

The present invention relates to a built-in household appliance, and in particular to a system for adjusting an adjustable foot to be placed at a rear corner of said appliance. Specific reference will be made hereafter to a washing machine, while it is clear that what is said is also applicable to other household appliances such as dishwashers, refrigerators, etc.

It is known that washing machines are provided with adjustable feet to arrange them perfectly level, so as to minimize the oscillations that may occur during the spin-drying phase. An adjustable foot is substantially made up of a threaded stud provided with a base pad of non-skid material, typically rubber. Said stud is screwed into a threaded vertical seat integral with the machine frame, so that by rotating the stud it is possible to adjust the height of the machine through the change in the length of the stud portion that protrudes from the threaded seat.

In the case of built-in washing machines the rear feet have to be adjusted from the front side of the machine, since they are not directly accessible. To this purpose, the arrangement presently adopted consists of an adjustment control relay device formed by a pair of gears and a horizontal bar extending from the front side of the machine to the rear foot. An example of such a foot adjustment device is disclosed in DE 9112657U.

More specifically, the operator can rotate through said relay bar a horizontal gear enmeshed with a vertical gear, inside which the threaded stud is in turn rotationally restrained through a shaped portion (e.g. square or hexagonal) extending above the threaded portion screwed into the threaded seat. As a consequence, when the operator acts on the relay bar from the front side of the machine, the above-illustrated kinematic chain converts the horizontal rotation of said bar into a vertical rotation of the threaded stud.

Since the base of the foot is made of non-skid material, and a significant portion of the machine weight bears upon it, it would be difficult for the threaded stud to draw into rotation also the base and moreover this would impose a great stress on the kinematic relay chain. An example of such an integral foot is disclosed in DE 20 2004 017329U.

Therefore, the base is rotatably secured to the stud, typically through a washer or the like, and remains still while the stud rotates inside the threaded seat. However, this is disadvantageous because the play required between the threaded stud and the base negatively affects the stability of the foot, especially in the spin-drying phase. This may result in various drawbacks such as hitting the furniture that houses the machine, noise, risks of leaks from the water feed and drain pipes.

Therefore the object of the present invention is to provide an adjustment system which overcomes the above-mentioned drawbacks. This object is achieved by means of an adjustment system in which the threaded seat where the threaded stud is screwed is formed inside the vertical gear of the relay device, while a shaped portion extending below the threaded portion is rotationally restrained in a corresponding seat integral with the machine.

The main advantage of this system is the greater stability of the washing machine resulting from the possibility of making the foot with the threaded stud integral with the non-skid base, given that both of them remain still during the height adjustment. As a consequence, by dispensing with the play between stud and base the foot is more resistant to vibrations and the oscillations in the spin-drying phase are dramatically reduced.

A further advantage of said system is the structural simplicity of this arrangement, that does not imply an increase in cost or bulkiness with respect to the known arrangement and therefore can be easily implemented in the production line. On the contrary, the foot can be manufactured with a rubber base directly moulded onto the threaded stud, thus also dispensing with the assembly step of the conventional foot and reducing the cost thereof.

These and other advantages and characteristics of the adjustment system according to the present invention as defined in the appended claims will be clear to those skilled in the art from the following detailed description of an embodiment thereof, with reference to the annexed drawings wherein:

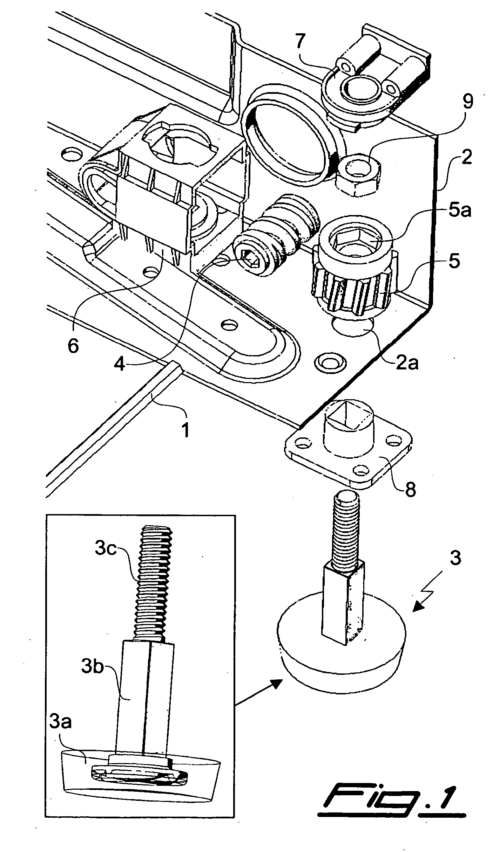

Fig.1 is a perspective exploded view of the components of the relay device, with also a see-through detail of the foot;

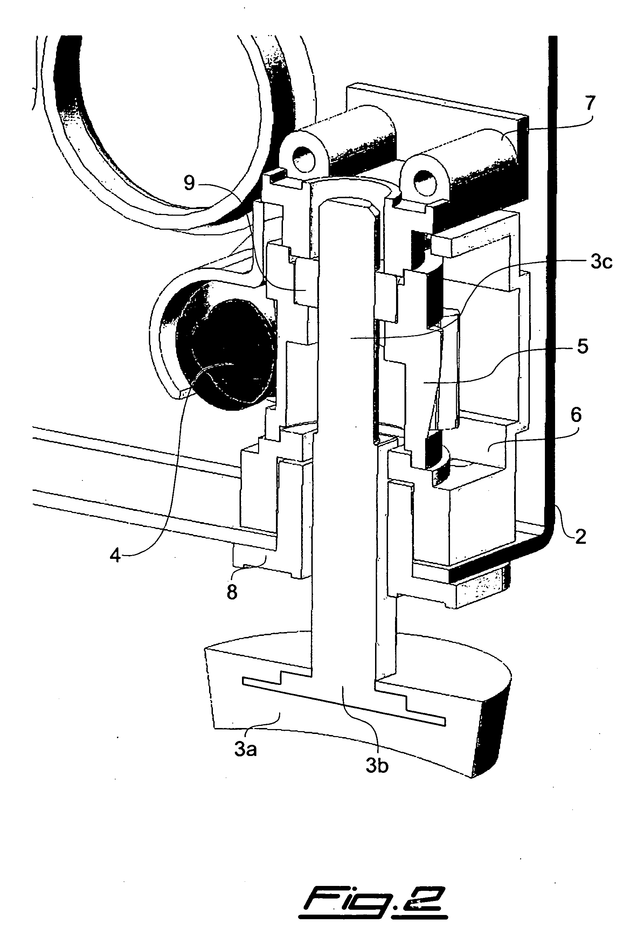

Fig.2 is a perspective sectional view of the assembled above components taken along a longitudinal midplane; and

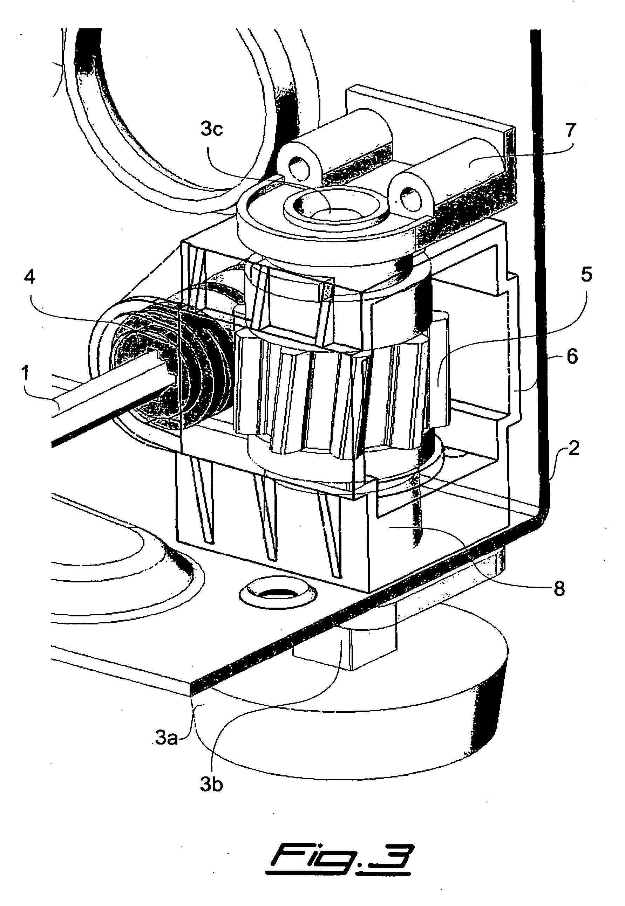

Fig.3 is a perspective partially see-through view of said assembled components in the operating condition.

With reference to said figures, there is seen that an adjustment system according to the present invention conventionally includes a relay bar 1, e.g. with an hexagonal cross-section, extending from the front side of the machine to a rear corner 2 where an adjustable foot 3 is located. The rear end of bar 1 is rotationally restrained in a horizontal gear 4, provided with a corresponding hexagonal socket, enmeshed with an adjacent vertical gear 5.

Both gears 4, 5 are housed in a casing 6 secured at the top by a cover 7 provided with fastener seats. Said members 5, 7 are aligned with a hole 2a through which a seat 8 is secured on the machine and introduced into casing 6, foot 3 being then introduced from below into seat 8 and into the vertical gear 5.

The novel aspect of the present invention resides in the configuration of these latter three members. More specifically, foot 3 is formed by a base 3a made of non-skid material, typically rubber, integral with a stud comprising a bottom shaped portion 3b and a top threaded portion 3c. In particular, the shaped portion 3b preferably has a disk-shaped enlarged bottom to improve the connection when moulding the rubber base 3a onto the stud, said process being the preferred type of coupling between these two members.

Furthermore, seat 8 rather than being threaded as in conventional washing machines has a shape corresponding to the shape of the stud bottom portion 3b that is rotationally restrained therein. Similarly, the vertical gear 5 rather than having a shaped socket as in conventional washing machines has an internal thread in which the top portion 3c of the stud is screwed. For the sake of simplicity, in the preferred embodiment illustrated in the drawings the internal thread of the vertical gear 5 is formed by means of a nut 9 locked in a corresponding seat 5a.

In the light of the description above, the simple and reliable operation of the present height adjustment system is readily understood.

When the operator rotates bar 1 thus rotating the horizontal gear 4, the latter transmits the rotation to the vertical gear 5 that in turn rotates nut 9 that moves up or down along the top threaded portion 3c of the stud while the latter remains still. Since nut 9 is enclosed in casing 6 that is integral with the washing machine, the movement of nut 9 results in an adjustment of the height of the washing machine at the corner where the foot is located.

It is clear that the above-described and illustrated embodiment of the adjustment system according to the invention is just an example susceptible of various modifications. In particular, the exact shape and size of the various members may change according to specific needs as long as the above-described couplings remain unchanged. For example, the bottom portion 3b could be rotationally restrained in seat 8 through a different shape of any kind as long as non-circular, and the same applies to bar 1 and horizontal gear 4.

## Claims

1. Built-in household appliance comprising a system for adjusting the height of said appliance, said system including a relay bar (1) extending from the front side of the appliance to a rear corner (2) where an adjustable foot (3) is located, the rear end of said bar (1) being rotationally restrained in a horizontal gear (4) enmeshed with an adjacent vertical gear (5) housed in a casing (6) integral with the appliance, said vertical gear (5) being aligned with a hole (2a) through which a seat (8) is secured on said appliance, said foot (3) being inserted into said seat (8) and into the vertical gear (5), wherein the foot (3) is formed by a base (3a) of non-skid material integral with a stud comprising a bottom shaped portion (3b) and a top threaded portion (3c), the seat (8) having a shape corresponding to the shape of said stud bottom portion (3b) that is rotationally restrained therein, and the vertical gear (5) having an internal thread in which said stud top portion (3c) is screwed.

2. Built-in household appliance according to claim 1, **characterized in that** the base (3a) of non-skid material is made integral with the bottom shaped portion (3b) of the stud by moulding.

3. Built-in household appliance according to claim 2, **characterized in that** the bottom shaped portion (3b) of the stud has a disk-shaped enlarged bottom end.

4. Built-in household appliance according to one of the preceding claims, **characterized in that** the internal thread of the vertical gear (5) is formed by means of a nut (9) locked in a corresponding seat (5a).

## Patentansprüche

1. Einbauhaushaltsgerät umfassend ein System zum Einstellen der Höhe des Gerätes, wobei das System einen Übermittlungsstab (1) beinhaltet der sich von der Vorderseite des Gerätes zur hinteren Ecke (2), wo ein einstellbarer Fuß (3) angeordnet ist, erstreckt, wobei das hintere Ende dieses Stabes (1) rotatorisch in einem horizontalen Zahnrad (4), das mit einem benachbarten vertikalen Zahnrad (5), welches in einem Gehäuse (6) innerhalb des Geräts integriert ist, kämmt, eingespannt ist, wobei das vertikale Zahnrad (5) mit einem Loch (2a) ausgerichtet ist, durch welches eine Aufnahme (8) an dem Gerät gesichert ist, wobei der Fuß (3) in die Aufnahme (8) und in das vertikale Zahnrad (5) eingesetzt ist, wobei der Fuß (3) aus einer Basis (3a) aus rutschfestem Material mit einem integrierten hervorstehendem Stück, umfassend einen unteren geformten Anteil (3b) und einen oberen Gewindeanteil (3c) geformt ist, wobei die Aufnahme (8)eine Form entsprechend der Form des unteren Anteils des hervortretenden Stücks (3b) aufweist, welches darin rotatorisch eingespannt ist, und wobei das vertikale Zahnrad (5) ein Innengewinde aufweist, in das der obere Anteil des hervortretenden Stückes (3c) eingeschraubt ist.

2. Einbauhaushaltsgerät nach Anspruch 1, **dadurch gekennzeichnet, dass** die Basis (3a) aus rutschfesten Material integral mit dem unteren geformten Anteil (3b) des hervortretenden Stückes durch Formen hergestellt ist.

3. Einbauhaushaltsgerät nach Anspruch 2, **dadurch gekennzeichnet, dass** der untere geformte Anteil (3b) des hervortretenden Stückes ein scheibenförmiges vergrößertes unteres Ende aufweist.

4. Einbauhaushaltsgerät nach einem der vorangegangenen Ansprüche, **dadurch gekennzeichnet, dass** das Innengewinde des vertikalen Zahnrades (5) mit Hilfe einer Nuss (9) gebildet ist, die in einer entsprechenden Aufnahme (5a) blockiert ist.

## Revendications

1. Appareil électroménager encastré comportant un système pour ajuster la hauteur dudit appareil, ledit système incluant une barre de relais (1) s'étendant depuis la face avant de l'appareil jusqu'au coin arrière (2) où un pied ajustable (3) est positionné, l'extrémité arrière de ladite barre (1) entraînant en rotation un pignon horizontal (4) coopérant avec un pignon vertical adjacent (5) assujetti dans un logement (6) solidaire de l'appareil, ledit pignon vertical (5) étant aligné avec un trou (2a) dans lequel un palier (8) est solidarisé avec ledit appareil, ledit pied (3) étant inséré dans ledit palier (8) et dans le pignon vertical (5), dans lequel le pied (3) est formé par une base (3 a) en un matériau anti-dérapant comportant un axe comprenant une portion d'embase (3b) et une portion supérieure filtée (3c), le palier (8) présentant une forme complémentaire à la forme de ladite portion d'embase (3b) de l'axe qui est bloquée en rotation à l'intérieur, et le pignon vertical (5) présentant un taraudage dans lequel la portion supérieure (3c) de l'axe est vissée.

2. Appareil électroménager encastré selon la revendication 1, **caractérisé en ce que** la base (3a) en matériau anti-dérapant est intégrée dans la portion d'embase (3b) de l'axe par moulage.

3. Appareil électroménager encastré selon la revendication 2, **caractérisé en ce que** la portion d'embase (3b) de l'axe a une extrémité d'embase évasée en forme de disque.

4. Appareil électroménager encastré selon l'une des revendications précédentes, **caractérisé en ce que** le taraudage du pignon vertical (5) est formé par des moyens comportant un écrou (9) bloqué dans un logement complémentaire (5a).
